# EUROPEAN PATENT APPLICATION

(11) **EP 4 852 074 A1**
(43) Date of publication of application: **09.12.2026**
(21) Application number: 25902415.6
(22) Date of filing: 18.03.2025
(51) Int. Cl.: H01M 4/13

(54) **BATTERY CELL, BATTERY DEVICE AND ELECTRICAL DEVICE**

(71) Applicant: Contemporary Amperex Technology Co., Limited, Ningde, Fujian 352100 (CN)
(72) Inventor: DAI, Zhipeng, Ningde Fujian 352100 (CN); JIN, Chao, Ningde Fujian 352100 (CN); TAN, Jue, Ningde Fujian 352100 (CN); LI, Baiqing, Ningde Fujian 352100 (CN); ZHANG, Xin, Ningde Fujian 352100 (CN); CHEN, Shuai, Ningde Fujian 352100 (CN); WU, Jianxiong, Ningde Fujian 352100 (CN)
(74) Representative: Kraus & Lederer PartGmbB
(86) International application number: PCT/CN2025/083176
(87) International publication number: WO 2026/193697

(57) **Abstract**

The present disclosure provides a battery cell, a battery apparatus and an electrical apparatus. The battery cell includes a positive electrode plate, where the positive electrode plate includes a positive electrode current collector and a positive electrode film layer disposed on at least one side of the positive electrode current collector, and the porosity of the positive electrode film layer is 10%-25%; the positive electrode film layer includes positive electrode active material particles and a conductive agent; and the conductive agent includes a one-dimensional conductive agent, and in the section of the positive electrode film layer along the thickness direction of the positive electrode plate, the proportion of positive electrode active material particles connected by the one-dimensional conductive agent among the positive electrode active material particles is 20%-100%.

## Description

### TECHNICAL FIELD

The present application relates to the technical field of batteries, and in particular to a battery cell, a battery apparatus, and an electrical apparatus.

### BACKGROUND

In recent years, battery cells are widely applied in hydropower, firepower, wind power and solar power stations, and the like energy storage power supply systems, as well as in many fields of electric tools, electric bicycles, electric motorcycles, electric vehicles, military equipment, aerospace and the like.

Some electrical apparatuses require frequent charging and discharging, for example small-battery pure electric BEV vehicle models, hybrid HEV vehicle models, unmanned aerial vehicles, and energy storage stations, etc. Batteries not only need to have a sufficient capacity to support the operation of electrical apparatuses, but also face frequent charge-discharge cycles, which places higher demands on the performance of battery cells.

### SUMMARY OF THE INVENTION

The present application is made in view of the aforementioned problems, and an objective of the present application is to provide a battery cell, of which a positive electrode film layer structure improves the power performance of the battery while maintaining high energy density and has a high power performance retention capability during cycling.

A first aspect of the present application provides a battery cell. The battery cell includes a positive electrode plate, where the positive electrode plate includes a positive electrode current collector and a positive electrode film layer disposed on at least one side of the positive electrode current collector, and the porosity of the positive electrode film layer is 10%-25%; the positive electrode film layer includes positive electrode active material particles and a conductive agent; and the conductive agent includes a one-dimensional conductive agent, and in the section of the positive electrode film layer along the thickness direction of the positive electrode plate, the proportion of positive electrode active material particles connected by the one-dimensional conductive agent among the positive electrode active material particles is 20%-100%.

In an embodiment of the present application, by controlling the porosity of the positive electrode film layer within the aforementioned range, the energy density of the battery can be maintained at a high level, and the expansion and contraction of the electrode plate can be reduced. Moreover, by adding the one-dimensional conductive agent, a connection by the one-dimensional conductive agent exists among the positive electrode active material particles. Even at larger pores, thanks to the extremely high aspect ratio characteristic of the one-dimensional conductive agent, it is possible to realize "crossing" and build a conductive bridge, and the connection can still be maintained in the expanded state, which improves the conductivity inside the positive electrode film layer, thereby realizing improvement of the battery power performance and maintenance of it during cycling on the basis of maintaining high energy density.

In any embodiment, in the section of the positive electrode film layer along the thickness direction of the positive electrode plate, the proportion of positive electrode active material particles connected by the one-dimensional conductive agent among the positive electrode active material particles is 50%-100%. A conductive network among the positive electrode active material particles within the positive electrode film layer is further formed, and each particle may have multiple connecting particles, which is beneficial to enhance conductivity, increase the probability of maintaining connection after expansion, and further improve the power performance of the battery.

In any embodiment, a porosity of the positive electrode film layer is 16%-19%. An electrolyte solution can fully infiltrate the positive electrode active material particles while avoiding the appearance of excessively large pores, making it easier to form connection by the one-dimensional conductive agent among the positive electrode active material particles, which further improves the power performance of the battery. Smaller porosity is beneficial to suppress the expansion of the positive electrode plate and improve the power performance degradation during the cycling process of the battery.

In any embodiment, based on the total mass of the positive electrode film layer, a mass content of the one-dimensional conductive agent is 0.1%-1%, and optionally 0.2%-0.5%. The mass content of the one-dimensional conductive agent is within the aforementioned range, so that the positive electrode film layer has good electronic conductivity and processability.

In any embodiment, based on the total mass of the positive electrode film layer, a mass content of the conductive agent is 0.5%-1.5%, and optionally 0.8%-1.2%. When the mass content of the conductive agent is within the aforementioned range, it further improves the electronic conductivity of the positive electrode film layer and the power performance of the battery; and meanwhile, the content of the conductive agent is controlled, so that the loading of an active material in the positive electrode film layer is increased, thereby achieving the effect of giving consideration to the energy density of the battery.

In any embodiment, the positive electrode active material particle includes a lithium-containing transition metal oxide, and the molar ratio of a nickel element in the lithium-containing transition metal oxide is 40%-95% based on the total mole of a transition metal in the lithium-containing transition metal oxide. Since nickel has high electrochemical activity, increasing the content of nickel facilitates giving the battery the advantages of high energy density and high power performance.

In any embodiment, the positive electrode active material includes the following component: LiₐNiₓCo_{y}M1_{z}M2_{b}O_{c}, where 0.6 ≤ a ≤ 1.2, 0.4≤ x ≤ 0.95, 0 < y ≤ 0.3, 0 < z < 0.5, 0≤ b < 0.5, and 1.9 ≤ c ≤ 2.1, wherein M1 includes one or more of Mn and Al, and M2 includes one or more of Al, Na, K, Ca, Ba, Sb, Ti, Zr, W, Sr, Nb, Mo, Si, Mg, B, Cr, Ta and Y. A cobalt element and a nickel element have similar ionic radii and similar electron distributions. The local phase transition of an NiO₆ octahedral structure is suppressed by the cobalt element, which reduces the non-stoichiometric ratio of LiNiO₂ and improves the stability of the layered structure during cycling. The M1 element does not participate in redox reactions during the charge-discharge process, so there are no structural changes caused by a Jahn-Teller effect, which thus can play a role in stabilizing the layered structure. Selecting an appropriate modifying element M2 can improve a lattice change rate of the positive electrode active material during lithium deintercalation, reduce oxygen activity on the surfaces of the particles, and improve the structural stability of the material, thereby increasing a gram capacity level of the material during the cycling.

In any embodiment, a particle size distribution pattern of the particles in the positive electrode film layer is bimodal distribution. The bimodal distribution means that the cooperation of particles with different particle sizes can play a certain supporting role, improve mechanical strength, and is beneficial to improve the compaction density of the positive electrode film layer, thereby further improving the compaction density of the electrode plate and the energy density of the battery.

In any embodiment, in the particle size distribution diagram of the particles in the positive electrode film layer, a first peak position is located at 1.5 µm-5 µm, and optionally 2.5 µm-3 µm; and/or a second peak position is located at 5 µm-13 µm, optionally 7 µm-11 µm.

In any embodiment, a particle size distribution pattern of the particles in the positive electrode film layer is unimodal distribution as determined by a laser diffraction method, and the peak position is located at 2 µm-5 µm.

The peak position is controlled within a suitable range to enable the battery to have high volumetric energy density, and excellent power performance and mechanical strength.

In any embodiment, the positive electrode active material particle includes a monocrystalline particle. Because of its larger particles, the monocrystalline structure has a longer diffusion path for excited-state oxygen molecules, making it less prone to oxygen loss compared to the polycrystalline structure, thus offering a higher safety factor.

In any embodiment, the Dᵥ₅₀ of the monocrystalline particle is 2 µm-5 µm, and the (Dᵥ₉₀ - Dᵥ₁₀)/Dᵥ₅₀ of the monocrystalline particle is 1.2-1.7. The positive electrode active material formed by the monocrystalline particles has a relatively dense structure, which can maintain good structural stability while having high compaction density, thereby reducing side reactions during the charge-discharge process, slowing down consumption of the electrolyte solution, and improving the service life of the battery. By adjusting (Dᵥ₉₀ - Dᵥ₁₀)/Dᵥ₅₀ of the monocrystalline particle within the aforementioned range, the space utilization rate of the positive electrode active material is improved, which is beneficial for the battery cell to maintain a high energy density; and it can further reduce the contact resistance among the particles of the positive electrode active material, reduce the impedance of the battery cell, and thus achieve improvement in the power performance.

In any embodiment, the positive electrode active material particle further include a polycrystalline particle. For the polycrystalline particle, there are more grain boundaries among the grains, which makes it prone to generating microcracks along the grain boundaries during repeated charge-discharge cycles. This increases the surface area, allows an electrolyte to permeate, and reduces a lithium-ion transport path, which is beneficial for lithium-ion diffusion and improves the power performance of the battery.

In any embodiment, the Dᵥ₅₀ of the polycrystalline particle is 5 µm-15 µm, and the (Dᵥ₉₀ - Dᵥ₁₀₎/Dᵥ₅₀ of the polycrystalline particle is 1.1-1.4. The Dᵥ₅₀ and the (Dᵥ₉₀ - Dᵥ₁₀)/Dᵥ₅₀ of the polycrystalline particle of the positive electrode active material are within the aforementioned ranges, so that a reasonable particle size gradation is formed between the smaller monocrystalline particles and the larger polycrystalline particles. This enables the positive electrode film layer to form a complete pore structure while improving the compaction density of the entire positive electrode plate and increasing the energy density of the battery cell, which is beneficial to formation of conductive connections among the particles by the one-dimensional conductive agent and the infiltration with the electrolyte solution, thereby improving the power performance of the battery cell. Meanwhile, during the cycling process, the internal stress of the particles of the positive electrode active material remains within a small range, reducing the possibility of breakage.

In any embodiment, a mass ratio of the monocrystalline particles to the polycrystalline particles is 1:9 - 5:5. When the mass ratio of the polycrystalline particles to the monocrystalline particles is within the aforementioned range, depending on different physical characteristics of the two, it can not only meet the high compaction density and high safety, but also facilitate the transmission of lithium ions, and give consideration to the energy density and power performance of the battery.

In any embodiment, at least part of a surface of the positive electrode active material is provided with a cladding layer, and the cladding layer includes a metal oxide or a metal fluoride that is optionally one or more of aluminum oxide, titanium oxide, tungsten oxide, niobium oxide, boron oxide, molybdenum oxide, lithium fluoride and aluminum fluoride. The aforementioned cladding layer is beneficial to improve the stability of the interface between the positive electrode active material and the electrolyte solution. The oxide-cladded materials can react with fluoride byproducts in the electrolyte solution to eliminate hydrogen fluoride, thereby improving the structural stability of the electrode. The fluoride-cladded materials can alleviate lattice expansion and suppress lithium-nickel mixed arrangement and lithium loss during cycling, and can also suppress the generation of residual alkali on the surface of a high-nickel positive electrode active material, thereby improving cyclicity and interface stability.

In any embodiment, the one-dimensional conductive agent includes one or more of a carbon nanotube, a carbon nanofiber, a graphene nanoribbon, a metal nanowire and a metal oxide nanowire. The conductive materials with one-dimensional structures described above all can meet the requirements of the present application to improve electronic conductivity and form connections among particles.

In any embodiment, the one-dimensional conductive agent is a carbon nanotube conductive agent. Due to its hollow structure, the carbon nanotube conductive agent has a certain liquid retention capacity, which is beneficial to improve long-cycling performance; and meanwhile, compared with metal and metal oxide materials, the carbon nanotube is less likely to undergo side reactions with the electrolyte solution and have better compatibility with other components in the positive electrode plate.

In any embodiment, the carbon nanotube conductive agent includes one or more of a single-walled carbon nanotube, a few-walled carbon nanotube and a multi-walled carbon nanotube.

In any embodiment, the single-walled carbon nanotube has the number of tube wall layers of 1, and a tube diameter of 2 nm-5 nm.

In any embodiment, the few-walled carbon nanotube has the number of tube wall layers of 2-9, and a tube diameter of 5 nm-15 nm.

The single-walled and few-walled carbon nanotubes have extremely high electronic conductivity, which can effectively transfer electrons, reduce the electron transport impedance inside the battery, and improve the power density and charge-discharge efficiency of the battery.

In any embodiment, the multi-walled carbon nanotube has the number of tube wall layers of 10-20, and a tube diameter of 15 nm-50 nm.

The multi-walled carbon nanotube, due to its walls composed of multiple carbon layers, offers greater mechanical strength and rigidity in the structure, which can provide a stronger supporting effect during the charge-discharge process and mitigating the effects brought about by electrode expansion and contraction. The outer surface of the multi-walled carbon nanotube is relatively rough, which makes it easier to interact with other materials, resulting in better dispersibility of it in a slurry.

In any embodiment, the conductive agent further includes a zero-dimensional conductive agent, and the zero-dimensional conductive agent includes one or more of Super-P, acetylene black, and Ketjen black. The zero-position conductive agent can form a regional conductive network with multiple contact points through mutual contact. When the one-dimensional conductive agent and the zero-dimensional conductive agent are used in combination, their conduction modes complement each other, allowing them to leverage their respective advantages and form a more efficient electron conduction network.

In any embodiment, the compaction density of the positive electrode film layer in a fully discharged state is 3.1 g/cm³ - 3.7 g/cm³.

The compaction density of the positive electrode film layer is within the aforementioned range, which is beneficial to achieve the specific porosity required in the present application and improve the energy density of the battery cell.

In any embodiment, the battery cell further includes a negative electrode plate. The negative electrode plate includes a negative electrode current collector and negative electrode film layer disposed on at least one side of the negative electrode current collector. The negative electrode film layer includes a negative electrode active material, and the negative electrode active material includes a silicon-based material and/or a carbon-based material, where the silicon-based material includes one or more of elemental silicon, a silicon oxide material and a silicon-carbon material; and the carbon-based material includes one or more of artificial graphite and natural graphite. These materials, as negative electrode active materials, have many advantages, such as a suitable potential for lithium, high structural stability, being not easy to deform during the cycle of lithium ion intercalation and deintercalation, high energy density, and easy formation of a stable SEI film on the surface, etc.

In any embodiment, a cell-to-case insertion clearance of the battery cell is 89%-94%. It can provide a sufficient space to accommodate an electrode assembly, and also leave gaps to facilitate installation and allow subsequent expansion of the electrode assembly while ensuring the energy density of the battery, thereby reducing the internal pressure of the case and improving the service life and safety of the battery.

In any embodiment, the battery cell includes any one of a cylindrical battery cell, a square shell battery cell and a pouch cell, and optionally a cylindrical battery cell. The cylindrical battery cell has a high internal pressure, making it easy for the electrolyte solution to be squeezed out during cyclic expansion and for the conductive network among particles to break during contraction. The battery cells provided in the embodiments of the present application are particularly suitable for cylindrical battery cells, which can give consideration to the power performance of the battery without significantly sacrificing the energy density of the battery, and maintain the power performance during the cycling process.

A second aspect of the present application provides a battery apparatus, including the battery cell according to the first aspect of the present application.

A third aspect of the present application provides an electrical apparatus, including at least one of the battery cell according to the first aspect of the present application or the battery apparatus according to the second aspect of the present application.

The above description is only a summary of the technical solutions of the present application, and in order to understand more clearly the technical means of the present application for implementing in accordance with the contents of the specification, and in order to make the above and other objectives, features and advantages of the present application more apparent and readily understandable, detailed description of the present application are hereby set forth below.

### BRIEF DESCRIPTION OF THE DRAWINGS

In the drawings, unless otherwise specified, like reference numerals indicate like or similar parts or elements throughout multiple drawings. These drawings are not necessarily drawn to scale. It should be understood that these accompanying drawings only depict some embodiments disclosed by the present application and should not be considered as limiting the scope of the present application.
FIG. 1 is a sectional polishing electron microscope morphology diagram of a positive electrode film layer along the thickness direction of an electrode plate according to some embodiments of the present application;
FIG. 2 is a schematic diagram of a positive electrode plate according to some embodiments of the present application, where (A) is a side view of the electrode plate, and (B) is a schematic structural diagram of the section of the electrode plate in A along a A-A direction;
FIG. 3 is a schematic diagram of a battery cell according to some embodiments of the present application;
FIG. 4 is a schematic exploded structural diagram of the battery cell according to some embodiments of the present application;
FIG. 5 is a schematic diagram of a battery module according to some embodiments of the present application;
FIG. 6 is a schematic diagram of a battery pack according to some embodiments of the present application;
FIG. 7 is a schematic exploded structural diagram of the battery pack according to some embodiments of the present application; and
FIG. 8 is a schematic view of an electrical apparatus in which a battery cell is used a power source, according to some embodiments of the present application.

Description of reference numerals:
1 battery pack; 2 upper box; 3 lower box; 4 battery module; 5 battery cell; 51 case; 52 electrode assembly; 53 cover plate; 521 positive electrode current collector; and 522 positive electrode film layer.

### DETAILED DESCRIPTION

Hereinafter, the embodiments of the battery cell, the battery apparatus and the electrical apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specified, all the steps in the present application can be performed in the order described or in a random order, and preferably in the order described. For example, the method includes steps (a) and (b), meaning that the method may include steps (a) and (b) performed sequentially, or may include steps (b) and (a) performed sequentially. For example, the method may further include step (c), meaning that step (c) may be added to the method in any order. For example, the method may include steps (a), (b), and (c), or may include steps (a), (c) and (b), or may include steps (c), (a) and (b), or the like.

In the present application, the terms "plurality" and "various" mean two or more.

Unless otherwise stated, the terms used in the present application have the well-known meanings commonly understood by those skilled in the art.

Unless otherwise stated, numerical values of parameters mentioned in the present application may be measured using various testing methods commonly used in the art. For example, the numerical values may be measured according to testing methods given in the embodiments of the present application. Unless otherwise specified, the test temperature for all parameters is 25°C.

The battery mentioned in the embodiments of the present application can be a single physical module including one or more battery cells to provide higher voltage and capacity. For example, the battery mentioned in the present application may include a battery cell, a battery module, a battery pack, or the like.

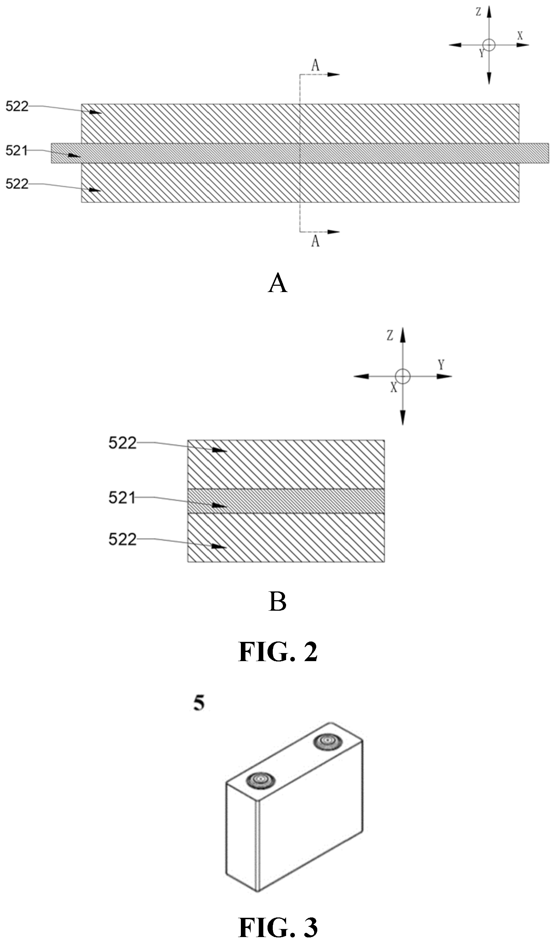

The battery cell is the smallest unit constituting a battery, and can independently achieve a charge-discharge function. The battery cell may be in a cylindrical shape, a rectangular parallelepiped shape or other shapes, which is not limited in the embodiments of the present application. For example, FIG. 3 shows a battery cell 5 in a rectangular parallelepiped structure as an example.

The battery cell includes an electrode assembly and an electrolyte.

The electrode assembly generally includes a positive electrode plate and a negative electrode plate. The negative electrode plate is an electrode in which reactions that absorb or lithiate lithium ions during charging and release or delithiate lithium during discharging occur. The positive electrode plate is an electrode in which reactions that release or delithiate lithium ions during charging and absorb or lithiate lithium during discharging occur.

In some embodiments, as shown in FIG. 2, the positive electrode plate of the battery cell includes a positive electrode current collector 521 and a positive electrode film layer 522. It can be understood that the aforementioned positive electrode film layer 522 can be disposed on one or both sides of the positive electrode current collector 521. The X direction represents the direction along the width of the positive electrode plate. The Y direction represents the direction along the length of the positive electrode plate. The Z direction represents the direction along the thickness of the positive electrode plate.

The battery cell may further include an outer package which may be configured to encapsulate the electrode assembly and the electrolyte. The outer package can be a hard shell, e.g. a hard plastic shell, an aluminum shell, a steel shell, etc. The outer package may also be a soft package, such as a pouch-type soft package. A material of the soft package may be plastic, e.g. one or more of polypropylene (PP), polybutylene terephthalate (PBT), and polybutylene succinate (PBS).

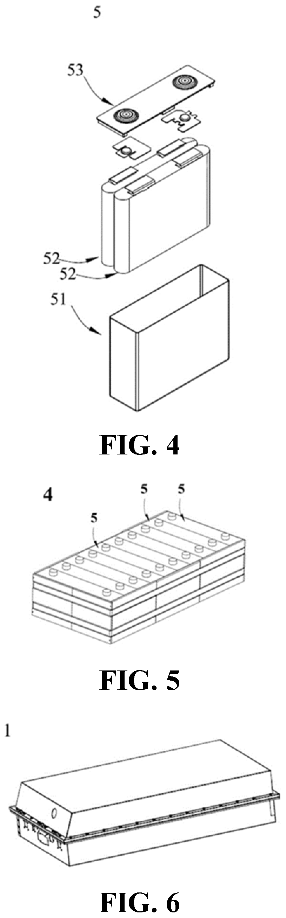

In some embodiments, as shown in FIG. 4, the outer package may include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 is configured to cover the opening to close the accommodating cavity. The electrode assembly 52 is encapsulated in the accommodating cavity. The number of the electrode assemblies 52 included in the battery cell 5 can be one or more, which can be adjusted according to requirements.

When a plurality of battery cells are provided, the plurality of battery cells are connected in series, in parallel, or in series-parallel connection through busbar components. In some embodiments, the battery may be a battery module. When there are a plurality of battery cells, the plurality of battery cells are arranged and fixed to form a battery module. In some embodiments, the battery may be a battery pack. The battery pack includes a box body and a battery cell. The battery cell or the battery module is accommodated in the box body. In some embodiments, the box body may serve as a part of a chassis structure of a vehicle. For example, a part of the box body may become at least one part of a bottom plate of the vehicle, or a part of the box body may become at least one part of a cross member and a side member of the vehicle.

In some embodiments, the battery cells can be assembled into a battery module, the number of battery cells included in the battery module may be multiple, and the specific number can be adjusted according to the application and capacity of the battery module. FIG. 5 is a schematic view of a battery module 4 as an example. As shown in FIG. 5, in the battery module 4, multiple battery cells 5 may be sequentially arranged along a length direction of the battery module 4. Of course, they can also be arranged in any other way. The plurality of battery cells 5 may further be fixed by fasteners.

Optionally, the battery module 4 may further include a shell having an accommodating space, and the plurality of battery cells 5 are accommodated in the accommodating space.

In some embodiments, the aforementioned battery module can further be assembled into a battery pack, and the number of battery modules included in the battery pack can be adjusted according to the application and capacity of the battery pack.

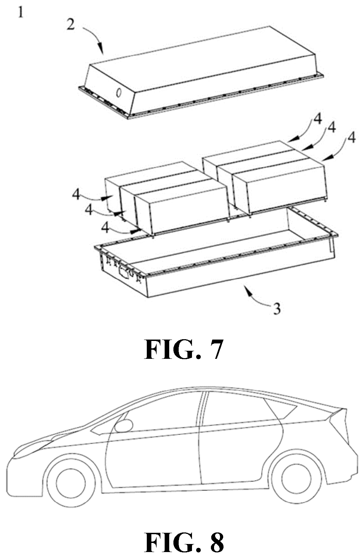

FIG. 6 and FIG. 7 are schematic views of a battery pack 1 as an example. As shown in FIGs. 6 and 7, the battery pack 1 can include a box body and a plurality of battery modules 4 disposed in the box body. The box body includes an upper box 2 and a lower box 3. The upper box 2 is used for covering the lower box 3 to form an enclosed space for accommodating the battery module 4. The multiple battery modules 4 may be arranged in the box body in any manner.

In some embodiments, as shown in FIG. 7, the outer package may include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 is configured to cover the opening to close the accommodating cavity. The electrode assembly 52 is encapsulated in the accommodating cavity. The number of the electrode assemblies 52 included in the battery cell 5 can be one or more, which can be adjusted according to requirements.

In some embodiments, the battery may be an energy storage apparatus. The energy storage apparatus includes an energy storage container, an energy storage electric cabinet, etc.

Currently, judging from the development of the market situation, batteries are widely applied in electric vehicles, power tools, electric devices, energy storage, etc., and the market demand for them is constantly expanding. Taking electric vehicles as an example, their penetration rate in the overall market has been approaching 50%. Hybrid electric vehicle (HEV) models are inherently disadvantaged in disability of equipping with large-capacity batteries in terms of weight and interior space layout, because they are equipped with both electric motors and internal combustion engines as drive systems. Some A0 and A-grade BEV models have smaller loaded battery capacities as limited by their sizes and costs. However, a small battery capacity means a small number of internal battery cells. Under conditions of the same power requirements, the discharge power of each battery cell is greater than that of a large-capacity battery. Under conditions of the same driving distance, small batteries represent more frequent charge-discharge. Therefore, challenges are posed to both the power performance of the battery and the maintenance of the power performance during a cycling process.

In the prior art of battery cells, in order to improve power performance, a common manner is to reduce the compaction density of the electrode plate or increase the porosity, and enhance the infiltration of the electrode plate in the electrolyte solution. However, at the same time, the space ratio of the active material in the electrode plate will also decrease. To maintain the volumetric energy density of a battery, it is often necessary to adopt a technical means of thickening the electrode plate of the battery. This will increase the insertion clearance of the battery. Although the kinetic performance of such a battery cell is improved in the early stage of cycling, in the later stage of cycling, the expansion of the active material increases the force between the battery case and the battery cell, the electrolyte solution in the pores is squeezed out of the battery cell and enters the battery case, making it difficult for the electrolyte solution to play its role. This results in a significant deterioration of the internal resistance and kinetics of the battery cell. It is a technical problem urgently to be solved how to give consideration to the power performance of the battery without significantly sacrificing the energy density of the battery, and maintain the power performance during the cycling process.

A first aspect of the present application provides a battery cell. The battery cell includes a positive electrode plate, where the positive electrode plate includes a positive electrode current collector and a positive electrode film layer disposed on at least one side of the positive electrode current collector, and the porosity of the positive electrode film layer is 10%-25%; the positive electrode film layer includes positive electrode active material particles and a conductive agent; and the conductive agent includes a one-dimensional conductive agent, and in the section of the positive electrode film layer along the thickness direction of the positive electrode plate, the proportion of positive electrode active material particles connected by the one-dimensional conductive agent among the positive electrode active material particles is 20%-100%.

In the present application, the term "one-dimensional conductive agent" refers to a conductive material that has a significant single dimension in space, while exhibiting a nanoscale in the other two dimensions. The one-dimensional conductive agent includes, but is not limited to, a carbon nanotube, graphene, a carbon nanofiber, etc.

In the present application, the term "positive electrode active material particle" refers to a particle with an identifiable complete boundary in a field of view of the positive electrode film layer at a certain magnification, for example, 5,000 times. Defects and scratches may exist inside the particle, but no complete boundary that is sufficient to divide the particle can be identified from the inside of the particle.

In the present application, the porosity of the positive electrode film layer has a meaning well known in the art, and can be tested by methods known in the art. As an example, the electrode plate can be cut into small circular pieces with a diameter of 14 mm, and the sample can be determined using a vacuum density tester (e.g., the AccuPyc II 1340 model fully automatic true density tester from Micromeritics, USA) with reference to the GB/T 24586-2009 standard. The number of test samples is greater than or equal to 30, and an average value is taken as the final result.

In some embodiments, the porosity of the positive electrode film layer is optionally 10%, 11%, 12%, 13%, 14%, 15%, 16%, 17%, 18%, 19%, 20%, 21%, 22%, 23%, 24%, 25%, or a numerical range between any two of the above values.

In the present application, "the section of the positive electrode film layer along the thickness direction of the positive electrode plate" has a meaning well known in the art. As an example, referring to FIG. 2, the positive electrode film layer is along the thickness direction of the positive electrode plate, i.e., the Z direction in FIG. 2. "The section of the positive electrode film layer along the thickness direction of the positive electrode plate" is cutting along the A-A direction in FIG. 2A to obtain the part of the positive electrode film layer 522 in the schematic sectional diagram shown in FIG. 2B.

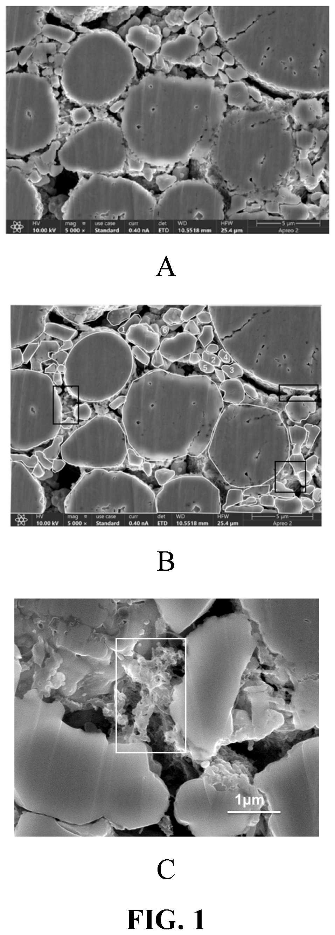

In the present application, a method for testing the proportion of positive electrode active material particles with one-dimensional conductive agent connection among positive electrode active material particles is as follows: cutting the positive electrode film layer along the thickness direction of the electrode plate by an argon ion beam (for example, device model: Leica EM TIC 3X CP; working voltage: 6 kV; working hours: 6 h); and after the section is exposed, observing the section of the positive electrode film layer along the thickness direction of the electrode plate by a scanning electron microscope (as an example, optionally, device model: Hitachi SU8230; working voltage: 3 kV; the beam current: high; probe model: U (LA100); working distance: < 5 mm). An image is acquired in a secondary electron mode using a field emission scanning electron microscope from a non-edge position in the section of the positive electrode film layer (after an edge of the electrode plate is observed under the scanning electron microscope, a field of view is adjusted to a center portion of the sample), an electron micrograph is taken at the magnification of 5 k times, and analyzed for the particles in the electron micrograph by ImageJ software (1.46r, version win64). A specific method of using the ImageJ software is as follows: loading a scanning electron microscope (SEM) picture to be analyzed, as shown in FIG. 1A; setting a segmentation diameter parameter, and performing particle identification to obtain the image as shown in FIG. 1B. The software automatically identifies the number of positive electrode active material particles in the field of view and marks the identified positive electrode active material particles with red lines. The number of positive electrode active material particles that are not obviously connected to the surrounding particles by a one-dimensional conductive agent is counted manually.

As shown in FIG. 1B, most of the particles are connected to each other through for example carbon nanotube one-dimensional conductive agents as shown in the black rectangular area to achieve the connection among the positive electrode active material particles, and the structure of the connection region is as shown in FIG. 1C. In FIG. 1B, only the positive electrode active material particles identified by serial numbers 1 to 6 are not connected to other positive electrode active materials by one-dimensional conductive agents. Studies have shown that one-dimensional conductive agents, including carbon nanotubes, have a high aspect ratio and can play a connecting role among the positive electrode active material particles through their lengths when the electrode plate expands. Since positive electrode active particles with a particle size of less than 1 µm have a large error in the statistical process of connection relationship, they are difficult to identify accurately; and positive electrode active material particles with a particle size of more than 1 µm are more prone to defects and voids on their surfaces and around them due to their greater expansion and contraction during the charge-discharge process, forming "isolated islands" in the electrode plate, which has a significant impact on the dynamic performance of the battery. Therefore, in the particle size statistics process of the present application, only positive electrode active material particles with a particle size greater than or equal to 1 µm are counted. Following the aforementioned method, in order to meet a statistically significant sample number, the connection situation of no less than 100 positive electrode active material particles is counted to obtain the total sample number n of the positive electrode active material particles, and the sample number m of positive electrode active material particles without obvious one-dimensional conductive agent connection with surrounding particles, and the proportion of positive electrode active material particles with one-dimensional conductive agent connection among the positive electrode active material particles is calculated as (n-m)/n.

In some embodiments, in the section of the positive electrode film layer along the thickness direction of the electrode plate, the proportion of positive electrode active material particles connected by the one-dimensional conductive agent among the positive electrode active material particles is optionally 20%, 25%, 30%, 35%, 40%, 45%, 50%, 55%, 60%, 65%, 70%, 75%, 80%, 85%, 90%, 95%, 100%, or a numerical range between any two of the above values.

Although a larger porosity of the positive electrode film layer is more conducive to the infiltration of the positive electrode active material in the electrolyte solution and thus achieves improvement in the power performance, the increase in the porosity will also lead to a decrease in the energy density of the battery cell at the same time, and the distance among the positive electrode active material particles will also increase accordingly. During cycling, the positive electrode active material will repeatedly contract and expand, causing the conductive network to break bridges, affecting the electron transport rate, and resulting in a deterioration in power performance in the later stage of cycling.

Studies have shown that controlling the porosity of the positive electrode film layer to 10%-25% can maintain the energy density of the battery at a high level and can reduce the expansion and contraction of the electrode plate. However, this will limit the transfer of electrons inside the electrode plate and affect the power performance of the battery. In the embodiments of the present application, by adding the one-dimensional conductive agent, a connection by the one-dimensional conductive agent exists among 20%-100% of the positive electrode active material particles. Even at larger pores, thanks to the extremely high aspect ratio characteristic of the one-dimensional material, it is possible to realize "crossing" and build a conductive bridge, and the connection can still be maintained in the expanded state, which improves the conductivity inside the positive electrode film layer, thereby realizing improvement of the battery power performance and maintenance of it during cycling on the basis of maintaining high energy density.

In some embodiments, in the section of the positive electrode film layer along the thickness direction of the positive electrode plate, the proportion of positive electrode active material particles connected by the one-dimensional conductive agent among the positive electrode active material particles is 50%-100%.

When the proportion of positive electrode active material particles with one-dimensional conductive agent connection among the positive electrode active material particles is within the aforementioned range, a conductive network among the positive electrode active material particles within the positive electrode film layer is further formed, and each particle may have multiple connecting particles, which is beneficial to enhance conductivity, increase the probability of maintaining connection after expansion, and further improve the power performance and power performance maintenance of the battery.

In some embodiments, a porosity of the positive electrode film layer is 16%-19%.

When the porosity of the positive electrode film layer is within the aforementioned range, an electrolyte solution can fully infiltrate the positive electrode active material particles while avoiding the appearance of excessively large pores, making it easier to form connection by the one-dimensional conductive agent among the positive electrode active material particles, which further improves the power performance of the battery. Smaller porosity is beneficial to suppress the expansion of the positive electrode plate and improve the power performance degradation during the cycling process of the battery.

In some embodiments, based on the total mass of the positive electrode film layer, a mass content of the one-dimensional conductive agent is 0.1%-1%, and optionally 0.2%-0.5%.

In some embodiments, based on the total mass of the positive electrode film layer, a mass content of the one-dimensional conductive agent is 0.1%, 0.2%, 0.3%, 0.4%, 0.5%, 0.6%, 0.7%, 0.8%, 0.9%, 1%, or a numerical range between any two of the above values.

The usage amount of the one-dimensional conductive agent and its effect on enhancing conductivity show a law of diminishing marginal utility. Moreover, the one-dimensional material has a large specific surface area, and excessive content of it can easily lead to agglomeration and difficulty in dispersion. Therefore, based on the total mass of the positive electrode film layer, the mass content of the one-dimensional conductive agent is within the aforementioned range, so that the positive electrode film layer has good electronic conductivity and processability.

In some embodiments, based on the total mass of the positive electrode film layer, a mass content of the conductive agent is 0.5%-1.5%.

In some embodiments, based on the total mass of the positive electrode film layer, a mass content of the conductive agent is optionally 0.5%, 0.6%, 0.7%, 0.8%, 0.9%, 1%, 1.1%, 1.2%, 1.3%, 1.4%, 1.5%, or a numerical range between any two of the above values.

In the present application, a method for testing the mass content of the conductive agent is as follows: disassembling the battery to obtain the positive electrode plate; scraping the positive electrode plate to obtain positive electrode coating powder; washing the powder with dimethyl carbonate, filtering and oven drying to obtain powder with a mass of M0; dissolving the positive electrode active material by soaking in a strong acid, and filtering and oven drying to determine the mass M1 of the residue. The residue with the mass M2 is taken to test the elemental distribution and obtain the mass proportion of the F element. Based on the proportion of the F element of 59.4%, the mass of PVDF is back-calculated to be M3. Finally, the mass proportion of the conductive agent in the coating is obtained as: ((M2 - M3)/M2) * (M1/M0).

Based on the total mass of the positive electrode film layer, when the mass content of the conductive agent is within the aforementioned range, it further improves the electronic conductivity of the positive electrode film layer and the power performance of the battery; and meanwhile, the content of the conductive agent is controlled, so that the loading of an active material in the positive electrode film layer is increased, thereby achieving the effect of giving consideration to the energy density of the battery.

In some embodiments, the positive electrode active material particle includes a lithium-containing transition metal oxide, and the molar ratio of a nickel element in the lithium-containing transition metal oxide is 40%-95% based on the total mole of a transition metal in the lithium-containing transition metal oxide.

When the molar ratio of the nickel element in the lithium-containing transition metal oxide is 40%-95%, since nickel has high electrochemical activity, increasing the content of nickel facilitates giving the battery the advantages of high energy density and high power performance.

In some embodiments, the positive electrode active material includes the following component: LiₐNiₓCo_{y}M1_{z}M2_{b}O_{c}, where 0.6 ≤ a ≤ 1.2, 0.4≤ x ≤ 0.95, 0 < y ≤ 0.3, 0 < z < 0.5, 0≤ b < 0.5, and 1.9 ≤ c ≤ 2.1, wherein M1 includes one or more of Mn and Al, and M2 includes one or more of Al, Na, K, Ca, Ba, Sb, Ti, Zr, W, Sr, Nb, Mo, Si, Mg, B, Cr, Ta and Y.

In some embodiments, a is optionally 0.6, 0.65, 0.70, 0.75, 0.80, 0.85, 0.90, 0.95, 1, 1.05, 1.1, 1.15, 1.2, or a numerical range between any two of the above values.

In some embodiments, x is optionally 0.4, 0.45, 0.5, 0.55, 0.60, 0.65, 0.70, 0.75, 0.80, 0.85, 0.90, 0.95, or a numerical range between any two of the above values.

In some embodiments, y is optionally 0.01, 0.02, 0.04, 0.06, 0.08, 0.10, 0.12, 0.14, 0.16, 0.18, 0.2, 0.22, 0.24, 0.26, 0.28, 0.3, or a numerical range between any two of the above values.

In some embodiments, z is optionally 0.01, 0.02, 0.04, 0.06, 0.08, 0.10, 0.12, 0.14, 0.16, 0.18, 0.2, 0.22, 0.24, 0.26, 0.28, 0.3, 0.32, 0.34, 0.36, 0.38, 0.4, 0.42, 0.44, 0.46, 0.48, 0.49, or a numerical range between any two of the above values.

In some embodiments, b is optionally 0, 0.01, 0.02, 0.04, 0.06, 0.08, 0.10, 0.12, 0.14, 0.16, 0.18, 0.2, 0.22, 0.24, 0.26, 0.28, 0.3, 0.32, 0.34, 0.36, 0.38, 0.4, 0.42, 0.44, 0.46, 0.48, 0.49, or a numerical range between any two of the above values.

In some embodiments, c is optionally 1.9, 1.91, 1.92, 1.93, 1.94, 1.95, 1.96, 1.97, 1.98, 1.99, 2, 2.01, 2.02, 2.03, 2.04, 2.05, 2.06, 2.07, 2.08, 2.09, 2.1, or a numerical range between any two of the above values.

In some embodiments, x + y + z + b = 1.

A cobalt element and a nickel element have similar ionic radii and similar electron distributions in LiₐNiₓCo_{y}M1_{z}M2_{b}O_{c}. The local phase transition of an NiO₆ octahedral structure is suppressed by the cobalt element, which reduces the non-stoichiometric ratio of LiNiO₂ and improves the stability of the layered structure during cycling. The M1 element does not participate in redox reactions during the charge-discharge process, so there are no structural changes caused by a Jahn-Teller effect, which thus can play a role in stabilizing the layered structure. Selecting an appropriate modifying element M2 can improve a lattice change rate of the positive electrode active material during lithium deintercalation, reduce oxygen activity on the surfaces of the particles, and improve the structural stability of the material, thereby increasing a gram capacity level of the material during the cycling.

In some embodiments, a particle size distribution pattern of the particles in the positive electrode film layer is bimodal distribution.

In the present application, the test method for determining the particle size distribution of the particles in the positive electrode film layer by laser diffraction is as follows: disassembling the battery to obtain the positive electrode plate; scraping the positive electrode plate to obtain positive electrode film layer powder, washing the powder with dimethyl carbonate (DMC), filtering and oven-drying to obtain the sample to be tested; adding 20 mL of deionized water (as long as the sample concentration ensures a shading degree of 8%-12%), sonicating for 5 min (53 kHz/120 W) to completely disperse the sample; and then determining the sample with a laser particle size analyzer (e.g., MasterSizer 2000 laser particle size analyzer) with reference to GB/T 19077-2016/ISO 13320:2009 standard to obtain a particle size distribution pattern based on volume distribution.

A particle size distribution pattern of the particles in the positive electrode film layer is bimodal distribution. That is, the cooperation of particles with different particle sizes can play a certain supporting role, improve mechanical strength, and is beneficial to improve the compaction density of the positive electrode film layer, thereby further improving the compaction density of the electrode plate and the energy density of the battery.

In some embodiments, a first peak position is located at 1.5 µm-5 µm, and optionally 2.5 µm-3 µm; and/or a second peak position is located at 5 µm-13 µm, optionally 7 µm-11 µm.

In some embodiments, the first peak position is located at 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, 4.1 µm, 4.2 µm, 4.3 µm, 4.4 µm, 4.5 µm, 4.6 µm, 4.7 µm, 4.8 µm, 4.9 µm, 5 µm, or a numerical range between any two of the above values.

In some embodiments, the second peak position is located at 5 µm, 5.1 µm, 5.2 µm, 5.3 µm, 5.4 µm, 5.5 µm, 5.6 µm, 5.7 µm, 5.8 µm, 5.9 µm, 6 µm, 6.1 µm, 6.2 µm, 6.3 µm, 6.4 µm, 6.5 µm, 6.6 µm, 6.7 µm, 6.8 µm, 6.9 µm, 7 µm, 7.1 µm, 7.2 µm, 7.3 µm, 7.4 µm, 7.5 µm, 7.6 µm, 7.7 µm, 7.8 µm, 7.9 µm, 8 µm, 8.1 µm, 8.2 µm, 8.3 µm, 8.4 µm, 8.5 µm, 8.6 µm, 8.7 µm, 8.8 µm, 8.9 µm, 9 µm, 9.1 µm, 9.2 µm, 9.3 µm, 9.4 µm, 9.5 µm, 9.6 µm, 9.7 µm, 9.8 µm, 9.9 µm, 10 µm, 10.1 µm, 10.2 µm, 10.3 µm, 10.4 µm, 10.5 µm, 10.6 µm, 10.7 µm, 10.8 µm, 10.9 µm, 11 µm, 11.1 µm, 11.2 µm, 11.3 µm, 11.4 µm, 11.5 µm, 11.6 µm, 11.7 µm, 11.8 µm, 11.9 µm, 12 µm, 12.1 µm, 12.2 µm, 12.3 µm, 12.4 µm, 12.5 µm, 12.6 µm, 12.7 µm, 12.8 µm, 12.9 µm, 13 µm, or a numerical range between any two of the above values.

In some embodiments, a particle size distribution pattern of the particles in the positive electrode film layer is unimodal distribution as determined by a laser diffraction method, and the peak position is located at 2 µm-5 µm.

In some embodiments, a particle size distribution pattern of the particles in the positive electrode film layer is unimodal distribution as determined by a laser diffraction method, and the peak position is located at 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, 4.1 µm, 4.2 µm, 4.3 µm, 4.4 µm, 4.5 µm, 4.6 µm, 4.7 µm, 4.8 µm, 4.9 µm, 5 µm, or a numerical range between any two of the above values.

The peak position is controlled within a suitable range to enable the battery to have high volumetric energy density, and excellent power performance and mechanical strength.

In some embodiments, the positive electrode active material particle includes a monocrystalline particle.

In the present application, the term "monocrystalline" refers to a crystal the internal structure of which essentially conforms to a lattice structure. Single crystals do not contain or contain a small amount of grain boundaries on a macroscopic scale, and the crystal orientation remains basically consistent throughout the interior.

During the charge-discharge process, the positive electrode active material undergoes incomplete redox reactions, producing some excited-state oxygen molecules, such as singlet oxygen, which may detach from its crystal structure and react with the electrolyte solution, increasing the risk of thermal runaway. Because of its larger particles, the monocrystalline structure has a longer diffusion path for oxygen, making it less prone to oxygen loss compared to the polycrystalline structure, thus offering a higher safety factor.

In some embodiments, the Dᵥ₅₀ of the monocrystalline particle is 2 µm-5 µm, and the (Dᵥ₉₀ - Dᵥ₁₀)/Dᵥ₅₀ of the monocrystalline particle is 1.2-1.7.

In some embodiments, the Dᵥ₅₀ of the monocrystalline particles is optionally 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, 4.1 µm, 4.2 µm, 4.3 µm, 4.4 µm, 4.5 µm, 4.6 µm, 4.7 µm, 4.8 µm, 4.9 µm, 5 µm, or a numerical range between any two of the above values.

In some embodiments, the (Dᵥ₉₀ - Dᵥ₁₀)/Dᵥ₅₀ of the monocrystalline particles is optionally 1.2, 1.3, 1.4, 1.5, 1.6, 1.7, or a numerical range between any two of the above values.

In the present application, the volume average particle sizes Dᵥ₁₀, Dᵥ₅₀ and Dᵥ₉₀ have meanings well known in the art, and can be tested by methods known in the art. The aforementioned method for testing the particle size distribution of the positive electrode active material particles can be referred. "Dᵥ₁₀", "Dᵥ₅₀" and "Dᵥ₉₀" correspond to the corresponding particle sizes when the percentages of particle size distribution obtained by testing with a laser scattering method reach 10%, 50% and 90%, respectively.

The positive electrode active material formed by the monocrystalline particles has a relatively dense structure, which can maintain good structural stability while having high compaction density, thereby reducing side reactions during the charge-discharge process, slowing down consumption of the electrolyte solution, and improving the service life of the battery. By adjusting (Dᵥ₉₀ - Dᵥ₁₀)/Dᵥ₅₀ of the monocrystalline particle within the aforementioned range, the space utilization rate of the positive electrode active material is improved, which is beneficial for the battery cell to maintain a high energy density; and it can further reduce the contact resistance among the particles of the positive electrode active material, reduce the impedance of the battery cell, and thus achieve improvement in the power performance.

In some embodiments, the positive electrode active material particle further includes a polycrystalline particle.

In the present application, the term "polycrystalline" refers to a crystal composed of many single crystal particles with different orientations. The entire structure is not penetrated by the same lattice.

For the polycrystalline particle, there are more grain boundaries among the grains, which makes it prone to generating microcracks along the grain boundaries during repeated charge-discharge cycles. This increases the surface area, allows an electrolyte to permeate, and reduces a lithium-ion transport path, which is beneficial for lithium-ion diffusion and improves the power performance of the battery.

In some embodiments, the Dᵥ₅₀ of the polycrystalline particle is 5 µm-15 µm, and the (Dᵥ₉₀ - Dᵥ₁₀)/Dᵥ₅₀ of the polycrystalline particle is 1.1-1.4.

In some embodiments, the Dᵥ₅₀ of the polycrystalline particles is optionally 5 µm, 5.1 µm, 5.2 µm, 5.3 µm, 5.4 µm, 5.5 µm, 5.6 µm, 5.7 µm, 5.8 µm, 5.9 µm, 6 µm, 6.1 µm, 6.2 µm, 6.3 µm, 6.4 µm, 6.5 µm, 6.6 µm, 6.7 µm, 6.8 µm, 6.9 µm, 7 µm, 7.1 µm, 7.2 µm, 7.3 µm, 7.4 µm, 7.5 µm, 7.6 µm, 7.7 µm, 7.8 µm, 7.9 µm, 8 µm, 8.1 µm, 8.2 µm, 8.3 µm, 8.4 µm, 8.5 µm, 8.6 µm, 8.7 µm, 8.8 µm, 8.9 µm, 9 µm, 9.1 µm, 9.2 µm, 9.3 µm, 9.4 µm, 9.5 µm, 9.6 µm, 9.7 µm, 9.8 µm, 9.9 µm, 10 µm, 10 µm, 10.1 µm, 10.2 µm, 10.3 µm, 10.4 µm, 10.5 µm, 10.6 µm, 10.7 µm, 10.8 µm, 10.9 µm, 11 µm, 11.1 µm, 11.2 µm, 11.3 µm, 11.4 µm, 11.5 µm, 11.6 µm, 11.7 µm, 11.8 µm, 11.9 µm, 12 µm, 12.1 µm, 12.2 µm, 12.3 µm, 12.4 µm, 12.5 µm, 12.6 µm, 12.7 µm, 12.8 µm, 12.9 µm, 13 µm, 13.1 µm, 13.2 µm, 13.3 µm, 13.4 µm, 13.5 µm, 13.6 µm, 13.7 µm, 13.8 µm, 13.9 µm, 14 µm, 14.1 µm, 14.2 µm, 14.3 µm, 14.4 µm, 14.5 µm, 14.6 µm, 14.7 µm, 14.8 µm, 14.9 µm, 15 µm, or a numerical range between any two of the above values.

In some embodiments, the (Dᵥ₉₀ - Dᵥ₁₀)/Dᵥ₅₀ of the polycrystalline particles is optionally 1.2, 1.3, 1.4, 1.5, 1.6, 1.7, or a numerical range between any two of the above values.

The Dᵥ₅₀ and the (Dᵥ₉₀ - Dᵥ₁₀)/Dᵥ₅₀ of the polycrystalline particle of the positive electrode active material are within the aforementioned ranges, so that a reasonable particle size gradation is formed between the smaller monocrystalline particles and the larger polycrystalline particles. This enables the positive electrode film layer to form a complete pore structure while improving the compaction density of the entire positive electrode plate and increasing the energy density of the battery cell, which is beneficial to formation of conductive connections among the particles by the one-dimensional conductive agent and the infiltration with the electrolyte solution, thereby improving the power performance of the battery cell. Meanwhile, during the cycling process, the internal stress of the particles of the positive electrode active material remains within a small range, reducing the possibility of breakage.

In some embodiments, a mass ratio of the monocrystalline particles to the polycrystalline particles is 1:9 - 5:5.

In some embodiments, the mass ratio of the monocrystalline particles to the polycrystalline particles is optionally 1:9, 1.5:8.5, 2:8, 2.5:7.5, 3:7, 3.5:6.5, 4:6, 4.5:5.5, 5:5, or a numerical range between any two of the above values.

When the mass ratio of the polycrystalline particles to the monocrystalline particles is within the aforementioned range, depending on different physical characteristics of the two, it can not only meet the high compaction density and high safety, but also facilitate the transmission of lithium ions, and give consideration to the energy density and power performance of the battery.

In some embodiments, at least part of a surface of the positive electrode active material is provided with a cladding layer, and the cladding layer includes a metal oxide or a metal fluoride that is optionally one or more of aluminum oxide, titanium oxide, tungsten oxide, niobium oxide, boron oxide, molybdenum oxide, lithium fluoride and aluminum fluoride.

The aforementioned cladding layer is beneficial to improve the stability of the interface between the positive electrode active material and the electrolyte solution. The oxide-cladded materials can react with fluoride byproducts in the electrolyte solution to eliminate hydrogen fluoride, thereby improving the structural stability of the electrode. The fluoride-cladded materials can alleviate lattice expansion and suppress lithium-nickel mixed arrangement and lithium loss during cycling, and can also suppress the generation of residual alkali on the surface of a high-nickel positive electrode active material, thereby improving cyclicity and interface stability.

In some embodiments, the one-dimensional conductive agent includes one or more of a carbon nanotube conductive agent, a carbon nanofiber, a graphene nanoribbon, a metal nanowire and a metal oxide nanowire.

The term "carbon nanotube" refers to a nano-material having several to dozens of coaxial hollow circular tubes formed by rolling up graphene sheets formed by sp² hybrid bonding of carbon atoms. The diameter is usually in the range of several to tens of nanometers, and the length may range from micrometers to centimeters, showing a high aspect ratio.

The term "carbon nanofiber" refers to a fibrous carbon nanomaterial formed by rolling up multiple layers of graphite sheets, which has a diameter typically of 10 nm-500 nm and a length of 0.5 µm-100 µm, and possess a high crystalline orientation degree, high electrical conductivity, and high thermal conductivity.

The term "graphene nanoribbon" refers to a graphene strip that is typically less than 50 nanometers wide.

The terms "metal nanowire" and "metal oxide nanowire" refer to metallic and metal oxide materials with diameters at the nanoscale, the lengths of which are usually much greater than their diameters, exhibiting a one-dimensional structure. Metallic materials are for example silver nanowires and copper nanowires; and metal oxide materials are for example tin dioxide nanowires and gallium nitride nanowires.

In the present application, the one-dimensional conductive agent includes, but is not limited to, the aforementioned material types. The conductive materials with one-dimensional structures all can meet the requirements of the present application to improve electronic conductivity and form connections among particles.

In some embodiments, the one-dimensional conductive agent is a carbon nanotube conductive agent.

Due to its hollow structure, the carbon nanotube conductive agent has a certain liquid retention capacity, which is beneficial to improve long-cycling performance; and meanwhile, compared with metal and metal oxide materials, the carbon nanotube is less likely to undergo side reactions with the electrolyte solution and have better compatibility with other components in the positive electrode plate.

In some embodiments, the carbon nanotube conductive agent includes one or more of a single-walled carbon nanotube, a few-walled carbon nanotube and a multi-walled carbon nanotube.

In some embodiments, the single-walled carbon nanotube has the number of tube wall layers of 1, and a tube diameter of 2 nm-5 nm.

In some embodiments, the tube diameter of the single-walled carbon nanotube is optionally 2 nm, 3 nm, 4 nm, 5 nm, or a numerical range between any two of the above values.

In some embodiments, the few-walled carbon nanotube has the number of tube wall layers of 2-9, and a tube diameter of 5 nm-15 nm.

In some embodiments, the number of wall layers of the few-walled carbon nanotube is optionally 2, 3, 4, 5, 6, 7, 8, 9, or a numerical range between any two of the above values.

In some embodiments, the tube diameter of the few-walled carbon nanotube is optionally 5 nm, 6 nm, 7 nm, 8 nm, 9 nm, 10 nm, 11 nm, 12 nm, 13 nm, 14 nm, 15 nm, or a numerical range between any two of the above values.

The single-walled and few-walled carbon nanotubes have extremely high electronic conductivity, which can effectively transfer electrons, reduce the electron transport impedance inside the battery, and improve the power density and charge-discharge efficiency of the battery.

In some embodiments, the multi-walled carbon nanotube has the number of tube wall layers of 10-20, and a tube diameter of 15 nm-50 nm.

In some embodiments, the number of wall layers of the multi-walled carbon nanotube is optionally 10, 11, 12, 13, 14, 15, 16, 17, 18, 19, 20, or a numerical range between any two of the above values.

In some embodiments, the tube diameter of the multi-walled carbon nanotube is optionally 15 nm, 20 nm, 25 nm, 30 nm, 35 nm, 40 nm, 45 nm, 50 nm, or a numerical range between any two of the above values.

The multi-walled carbon nanotube, due to its walls composed of multiple carbon layers, offers greater mechanical strength and rigidity in the structure, which can provide a stronger supporting effect during the charge-discharge process and mitigating the effects brought about by electrode expansion and contraction. The outer surface of the multi-walled carbon nanotube is relatively rough, which makes it easier to interact with other materials, resulting in better dispersibility of it in a slurry.

In some embodiments, the positive electrode film layer further includes a zero-dimensional conductive agent, and the zero-dimensional conductive agent includes one or more of Super-P, acetylene black, and Ketjen black.

In the present application, the term "zero-dimensional conductive agent" refers to a conductive material with a zero-dimensional structure, which is mainly characterized by having similar dimensions in all directions and exhibiting a dot-like structure. Such a conductive agent improves the conductivity of materials through point contact among the particles.

Since one-dimensional conductive agents can form point-to-point electron transport channels that span pores; and zero-dimensional conductive agents can form a regional conductive network with multiple contact points through mutual contact. When the one-dimensional conductive agent and the zero-dimensional conductive agent are used in combination, their conduction modes complement each other, allowing them to leverage their respective advantages and form a more efficient electron conduction network.

In some embodiments, the compaction density of the positive electrode film layer after cold pressing is 3.4 g/cm³-3.7 g/cm³.

In some embodiments, the compaction density of the positive electrode film layer after cold pressing is optionally 3.4 g/cm³, 3.42 g/cm³, 3.44 g/cm³, 3.46 g/cm³, 3.48 g/cm³, 3.5 g/cm³, 3.52 g/cm³, 3.54 g/cm³, 3.56 g/cm³, 3.58 g/cm³, 3.6 g/cm³, 3.62 g/cm³, 3.64 g/cm³, 3.66 g/cm³, 3.68 g/cm³, 3.7 g/cm³, or a numerical range between any two of the above values.

In the present application, the compaction density after cold pressing can be tested by methods known in the art. As an example, the positive electrode plate obtained after cold pressing is cut into small discs with an area of S. The mass W1 of the positive electrode plate is obtained, and the thickness T1 of the positive electrode plate is measured with a tenthousandth micrometer, then the positive electrode film layer of the aforementioned weighed positive electrode plate is wiped off, and the mass of the current collector is weighed and recorded as W2, and the thickness T2 of the current collector is measured with a tenthousandth micrometer, so that the compaction density of the positive electrode film layer is PD = (W1 - W2)/[(T1 - T2) × S].

In the process of preparing a battery cell, after the positive electrode slurry is coated onto the positive electrode current collector, it will be vacuum dried, cold pressed, slitted, and prepared to obtain the positive electrode plate. The compaction density obtained in the cold pressing step will be different from the compaction density in a fully discharged state after the positive electrode plate is obtained. This is because after the electrode plate is made, the positive electrode plate will exhibit a slight rebound phenomenon due to charging and discharging. At this time, the compaction density of the positive electrode film layer in the fully discharged state will be slightly less than the compaction density of the initial cold pressing.

In some embodiments, the compaction density of the positive electrode film layer in a fully discharged state is 3.1 g/cm³-3.7 g/cm³.

In some embodiments, the compaction density of the positive electrode film layer in the fully discharged state is optionally 3.1 g/cm³, 3.2 g/cm³, 3.3 g/cm³, 3.4 g/cm³, 3.5 g/cm³, 3.6 g/cm³, 3.7 g/cm³, or a numerical range between any two of the above values.

In the present application, the fully discharged state refers to a state in which the battery is placed at 25°C and allowed to stand for 2 h; and after the temperature of the battery is maintained at 25°C, the battery is discharged at a constant current of 1/3 C to 2.8 V, then allowed to stand for 15 min, and then discharged at a constant current of 0.05 C to 2.8 V.

In the present application, the compaction density of the positive electrode film layer in the fully loaded state can be tested by methods known in the art. As an example, the battery is placed in a 25°C oven environment and allowed to stand for 2 h. When the temperature of the battery is maintained at 25°C, the battery is discharged at a constant current of 1/3 C to 2.8 V, then allowed to stand for 15 min, and then discharged at a constant current of 0.05 C to 2.8 V. The battery is disassembled to obtain the positive electrode plate. The residual electrolyte solution is treated with dimethyl carbonate as a solvent, and the electrode plate is oven-dried, The electrode plate is cut into small discs with an area of S. The mass W1 of the positive electrode plate is obtained, and the thickness T1 of the positive electrode plate is measured with a tenthousandth micrometer, then the positive electrode film layer of the aforementioned weighed positive electrode plate is wiped off, and the mass of the current collector is weighed and recorded as W2, and the thickness T2 of the current collector is measured with a tenthousandth micrometer, so that the compaction density of the positive electrode film layer is PD = (W1 - W2)/[(T1 - T2) × S].

The compaction density of the positive electrode film layer is within the aforementioned range, which is beneficial to achieve the specific porosity required in the present application and improve the energy density of the battery cell.

In some embodiments, the battery cell further includes a negative electrode plate. The negative electrode plate includes a negative electrode current collector and negative electrode film layer disposed on at least one side of the negative electrode current collector. The negative electrode film layer includes a negative electrode active material, and the negative electrode active material includes a silicon-based material and/or a carbon-based material, where the silicon-based material includes one or more of elemental silicon, a silicon oxide material and a silicon-carbon material; and the carbon-based material includes one or more of artificial graphite and natural graphite.

These materials, as negative electrode active materials, have many advantages, such as a suitable potential for lithium, high structural stability, being not easy to deform during the cycle of lithium ion intercalation and deintercalation, high energy density, and easy formation of a stable SEI film on the surface, etc.

In some embodiments, a cell-to-case insertion clearance of the battery cell is 89%-94%.

In some embodiments, a cell-to-case insertion clearance of the battery cell is optionally 89%, 90%, 91%, 92%, 93%, 94%, or a numerical range between any two of the above values.

Controlling the insertion clearance of the battery cell within a suitable range can provide a sufficient space to accommodate an electrode assembly, and also leave gaps to facilitate installation and allow subsequent expansion of the electrode assembly while ensuring the energy density of the battery, thereby reducing the internal pressure of the case and improving the service life and safety of the battery.

In some embodiments, the negative-electrode film layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally include other adjuvants, for example, a thickener (e.g., sodium carboxymethylcellulose (CMC-Na)) and the like.

In some embodiments, the negative electrode plate further includes a negative electrode current collector.

In some embodiments, the negative electrode current collector may be a metal foil or a composite current collector. For example, as the metal foil, a copper foil can be used. The composite current collector may include a polymer base layer and a metal layer formed on at least one surface of the polymer substrate. The composite current collector may be formed by forming a metal material (copper, copper alloys, nickel, nickel alloys, titanium, titanium alloys, silver and silver alloys, etc.) on a high polymer material substrate (such as substrate of polypropylene (PP), polyethylene terephthalate (PET), polybutylene terephthalate (PBT), polystyrene (PS), polyethylene (PE), etc.).

In some embodiments, the negative electrode plate can be prepared by: dispersing the aforementioned components for preparing the negative electrode plate, e.g., the negative electrode active material, the conductive agent, the binder and any other components in a solvent (e.g. deionized water) to form a negative electrode slurry; and coating the negative electrode slurry on a negative-electrode current collector, followed by oven drying, cold pressing and the like procedures, to obtain the negative electrode plate.

In some embodiments, the battery cell includes an electrolyte. The electrolyte plays the role of conducting ions between the positive electrode plate and the negative electrode plate. The type of the electrolyte is not specifically limited in the present application and can be selected according to requirements. For example, the electrolyte may be liquid, gelled, or all solid.

In some embodiments, an electrolyte solution is used as the electrolyte. The electrolyte solution comprises an electrolyte salt and a solvent.

In some embodiments, the electrolyte salt can be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), bistrifluoromethanesulfonimide lithium (LiTFSI), lithium triflate (LiTFS), lithium difluoro(oxalato)borate (LiDFOB), lithium dioxalato borate (LiBOB), lithium difluorophosphate (LiPO₂F₂), lithium difluoro bis(oxalato)phosphate (LiDFOP) and lithium tetrafluoro(oxalato)phosphate (LiTFOP). The concentration of the electrolyte salt is generally 0.5 mol/L-5 mol/L.

In some embodiments, the solvent can be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methylpropyl carbonate (MPC), ethylpropyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte solution further optionally includes an additive. For example, the additive may include a negative-electrode film-forming additive, or a positive-electrode film-forming additive, or may include an additive that capable of improving some performances of the battery, e.g., an additive for improving the overcharge performance of the battery, an additive for improving the high-temperature performance or low-temperature performance of the battery, and the like.

In some embodiments, the battery cell further includes therein a separator. The present application has no particular limitation on the types of the separator, and any well-known separator of a porous structure with good chemical stability and mechanical stability can be selected for use.

In some embodiments, the material of the separator can be selected from at least one of a glass fiber, non-woven fabric, polyethylene, polypropylene and polyvinylidene fluoride. The separator may be a single-layer thin film or a multi-layer composite thin film, and is not particularly limited. When the separator is a multilayer composite thin film, the materials of the layers may be the same or different without special limitations.

In some embodiments, the positive electrode plate, the negative electrode plate and the separator can be made into an electrode assembly by a winding process or a lamination process.

In some embodiments, the battery cell may include an outer package. The outer package may be used to encapsulate the electrode assembly and the electrolyte mentioned above.

In some embodiments, the outer package of the battery cell may be a hard shell, such as a hard plastic shell, an aluminum shell, and a steel shell. The outer package of the battery cell may also be a soft package, e.g. a bag-type soft package. The material of the soft package can be plastic, and as the plastic, polypropylene, polybutylene terephthalate, polybutylene succinate and the like can be listed.

In some embodiments, the battery cell includes any one of a cylindrical battery cell, a square shell battery cell and a pouch cell.

In some embodiments, the battery cell includes a cylindrical battery cell.

The cylindrical battery cell has a high internal pressure, making it easy for the electrolyte solution to be squeezed out during cyclic expansion and for the conductive network among particles to break during contraction. The battery cells provided in the embodiments of the present application are particularly suitable for cylindrical battery cells, which can give consideration to the power performance of the battery without significantly sacrificing the energy density of the battery, and maintain the power performance during the cycling process.

A second aspect of the present application provides a battery apparatus, including the battery cell provided in the first aspect of the present application. The battery apparatus includes at least one of a battery module, a battery pack and an energy storage apparatus.

A third aspect of the present application provides a method for preparing a positive electrode plate, including: obtaining a mixed raw material of a positive electrode active material, a conductive agent, and a binder; stirring and dispersing the mixed raw material to make a positive electrode slurry; coating the positive electrode slurry onto a positive electrode current collector; and after the coating is completed, vacuum drying, cold pressing, slitting, and preparing to obtain the positive electrode plate. The positive electrode plate includes a positive electrode current collector and a positive electrode film layer disposed on at least one side of the positive electrode current collector, and the porosity of the positive electrode film layer is 10%-25%; the positive electrode film layer includes positive electrode active material particles and a conductive agent; and the conductive agent includes a one-dimensional conductive agent, and in the section of the positive electrode film layer along the thickness direction of the positive electrode plate, the proportion of positive electrode active material particles connected by the one-dimensional conductive agent among the positive electrode active material particles is 20%-100%.

In some embodiments, the positive electrode active material particle includes a lithium-containing transition metal oxide. However, the present application is not limited to these materials, and other conventional materials that may be used as positive electrode active materials for batteries, e.g. lithium-containing phosphate with an olivine structure and a modified compound thereof, can also be used. These positive electrode active materials may be used alone or in combination of two or more thereof. Examples of lithium transition metal oxides can include, but are not limited to, at least one of lithium cobalt oxide (e.g., LiCoO₂), lithium nickel oxide (e.g., LiNiO₂), lithium manganese oxide (e.g., LiMnO₂ and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (e.g., LiNi_{0.85}Co_{0.15}Al_{0.05}O₂), modified compounds thereof, etc. Examples of the lithium-containing phosphate with an olivine structure may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode current collector can be a metal foil or a composite current collector. For example, as the metal foil, an aluminum foil can be used. The composite current collector may include a polymer base layer and a metal layer formed on at least one surface of the polymer base layer. The composite current collector can be formed by forming a metal material (aluminum, aluminum alloy, nickel, nickel alloy, titanium, titanium alloy, silver and silver alloy, etc.) on the polymer base layer (e.g., polypropylene (PP), polyethylene terephthalate (PET), polybutylene terephthalate (PBT), polystyrene (PS), polyethylene (PE), etc.).

In some embodiments, the binder may be one or more of styrene butadiene rubber (SBR), water-based acrylic resin, polyvinylidene fluoride (PVDF), polytetrafluoroethylene (PTFE), an ethylene-vinyl acetate copolymer (EVA), polyacrylic acid (PAA), carboxymethyl cellulose (CMC), polyvinyl alcohol (PVA), and polyvinyl butyral (PVB).

In some embodiments, the positive electrode slurry has the viscosity of 5,000-25,000 mPa·s, and the solid content of 60%-80%.

Since the one-dimensional conductive agent has a high specific surface area, it is prone to forming a strong van der Waals force, which makes carbon nanotubes tend to aggregate. A high solid content is beneficial to increase the contact and friction between the one-dimensional conductive agent and the positive electrode active material, thereby avoiding or reducing an aggregation phenomenon, making the carbon nanotubes uniformly dispersed, and forming more effective connections among the particles. During the stirring and dispersion process, the viscosity of the positive electrode slurry being within the aforementioned range can effectively slow down the stratification or sedimentation of the active material and the conductive agent. The higher viscosity maintains the dispersion state of the one-dimensional conductive agent among the positive electrode active material particles, thereby increasing the proportion of positive electrode active material particles connected by one-dimensional conductive agents among the positive electrode active material particles.

Additionally, the present application further provides an electrical apparatus including at least one of the battery cell, the battery module, or the battery pack provided by the present application. The battery cell, the battery module, or the battery pack may be used as a power source of the electrical apparatus, or may be used as an energy storage unit of the electrical apparatus. The electrical apparatus may include, but is not limited to, a mobile device (e.g. a mobile phone, and a laptop, etc.), an electric vehicle (e.g. an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the battery cell, the battery module, or the battery pack can be selected according to use requirements of the electrical apparatus.

FIG. 8 is an example of an electrical apparatus. The electrical apparatus is an all-electric vehicle, a hybrid electric vehicle or a plug-in hybrid electric vehicle, and the like. In order to satisfy the requirements of the electrical apparatus for high power and high energy density of the battery cell, the battery pack or battery module can be employed.

As another example, the apparatus may be a mobile phone, a tablet, a laptop, etc. The apparatus is generally required to be thin and light, and may use a battery cell as a power source.

### Examples

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

### Example 1

### (1) Preparation of positive electrode plate:

98 wt.% of LiNi_{0.92}Co_{0.06}Mn_{0.02}O₂ as a positive electrode active material (monocrystalline: polycrystalline = 2:8 (mass ratio)), 0.3 wt.% of an one-dimensional conductive agent, 0.7 wt.% of a zero-dimensional conductive agent, and 1 wt.% of PVDF were mixed, then added with N-methylpyrrolidone, stirred and dispersed to prepare a positive electrode slurry. The surface of the LiNi_{0.92}Co_{0.06}Mn_{0.02}O₂ as the positive electrode active material had an alumina cladding layer. The monocrystalline material had a Dᵥ₅₀ of 3.5 µm and a (Dᵥ₉₀ - Dᵥ₁₀)/Dᵥ₅₀ of 1.53; the polycrystalline material had a Dᵥ₅₀ of 9.5 µm and a (Dᵥ₉₀ - Dᵥ₁₀)/Dᵥ₅₀ of 1.22. The one-dimensional conductive agent was a few-walled carbon nanotube (with the layer number of tube walls being 7, and a diameter of 13 nm), and the zero-dimensional conductive agent was a Super-P conductive agent. The positive electrode slurry had a solid content of 79% and a viscosity of 15,000 mPa·s at room temperature.

The positive electrode slurry was coated onto both side surfaces of aluminum foil. After the coating on both side surfaces were finished, it was oven-dried and cold pressed to obtain a positive electrode plate with a compaction density of 3.6 g/cm³.

### (2) Preparation of negative electrode plate:

96.5 wt% of graphite as a negative electrode active material, 0.4 wt% of conductive carbon, 2.0 wt% of a binder (styrene butadiene rubber (SBR)) and 1.6 wt% of a thickener (sodium carboxymethyl cellulose (CMC)) were mixed, added with deionized water, stirred and dispersed to prepare a negative electrode slurry.

The negative electrode slurry was coated onto both side surfaces of copper foil. After the coating on both side surfaces were finished, it was oven-dried and cold pressed to obtain a negative electrode plate.

### (3) Preparation of separator

A polypropylene film was used as the separator.

### (4) Preparation of electrolyte solution

In a glove box under an argon atmosphere (H₂O < 0.1 ppm, O₂ < 0.1 ppm), organic solvents ethylene carbonate (EC)/dimethyl carbonate (DMC) were mixed uniformly in a volume ratio of 1/1, added with a lithium salt LiPF₆ dissolved in an organic solvent with the content of LiPF₆ in the solution being 1 mol/L, and stirred uniformly to obtain an electrolyte solution.

### (5) Preparation of battery cell:

The positive electrode plate, the separator and the negative electrode plate were stacked in sequence, and the separator should be able to isolate the negative and positive electrodes. A bare battery cell was obtained by winding, placed in the outer package, injected with an electrolyte solution with an insertion clearance of 92%, and subjected to packaging, chemical formation, exhausting and the like procedures to finally obtain a battery cell.

### Example 2

This preparation example was basically the same as Preparation Example 1, only except that in the preparation step of the positive electrode plate, the cold pressing compaction density of the positive electrode plate was 3.5 g/cm³.

### Example 3

This preparation example was basically the same as Preparation Example 1, only except that in the preparation step of the positive electrode plate, the cold pressing compaction density of the positive electrode plate was 3.58 g/cm³.

### Example 4

This preparation example was basically the same as Preparation Example 1, only except that in the preparation step of the positive electrode plate, the one-dimensional conductive agent was a carbon nanofiber (with a tube diameter of 130 nm), and the cold pressing compaction density of the positive electrode plate was 3.58 g/cm³.

### Example 5

This preparation example was basically the same as Preparation Example 1, only except that in the preparation step of the positive electrode plate, the cold pressing compaction density of the positive electrode plate was 3.65 g/cm³.

### Example 6

This preparation example was basically the same as Preparation Example 1, only except that in the preparation step of the positive electrode plate, the positive electrode slurry had the solid content of 75% and the viscosity at room temperature of 8,000 mPa·s, and the cold pressing compaction density of the positive electrode plate was 3.65 g/cm³.

### Example 7

This preparation example was basically the same as Preparation Example 1, only except that in the preparation step of the positive electrode plate, the cold pressing compaction density of the positive electrode plate was 3.73 g/cm³.

### Example 8

This preparation example was basically the same as Preparation Example 1, only except that in the preparation step of the positive electrode plate, in the preparation step of the positive electrode plate, the positive electrode slurry had the solid content of 75% and the viscosity at room temperature of 8,000 mPa·s.

### Example 9

This preparation example was basically the same as Preparation Example 1, only except that in the preparation step of the positive electrode plate, the content of the one-dimensional conductive agent was 0.10 wt.%, and the positive electrode slurry had the solid content of 80% and the viscosity at room temperature of 20,000 mPa·s.

### Example 10

This preparation example was basically the same as Preparation Example 1, only except that in the preparation step of the positive electrode plate, the content of the one-dimensional conductive agent was 0.20 wt.%, and the positive electrode slurry had the solid content of 73% and the viscosity at room temperature of 12000 mPa·s.

### Example 11

This preparation example was basically the same as Preparation Example 1, only except that in the preparation step of the positive electrode plate, the content of the one-dimensional conductive agent was 0.50 wt.%.

### Example 12

This preparation example was basically the same as Preparation Example 1, only except that in the preparation step of the positive electrode plate, the content of the one-dimensional conductive agent was 0.50 wt.%, and the LiNi_{0.92}Co_{0.06}Mn_{0.02}O₂ as the positive electrode active material was pure monocrystalline.

### Example 13

This preparation example was basically the same as Preparation Example 1, only except that in the preparation step of the positive electrode plate, the content of the one-dimensional conductive agent was 1.00 wt.%.

### Example 14

This preparation example was basically the same as Preparation Example 1, only except that in the preparation step of the positive electrode plate, the one-dimensional conductive agent was a single-walled carbon nanotube (with the layer number of the tube walls being 1, and a tube diameter of 2 nm).

### Example 15

This preparation example was basically the same as Preparation Example 1, only except that in the preparation step of the positive electrode plate, the one-dimensional conductive agent was a multi-walled carbon nanotube (with the layer number of the tube walls being 14, and a tube diameter of 45 nm).

### Example 16

This preparation example was basically the same as Preparation Example 1, only except that in the preparation step of the positive electrode plate, the positive electrode active material was LiNi_{0.95}Co_{0.01}Mn_{0.03}O₂.

### Example 17

This preparation example was basically the same as Preparation Example 1, only except that in the preparation step of the positive electrode plate, the monocrystalline material had a Dᵥ₅₀ of 2.9 µm and (Dᵥ₉₀ - Dᵥ₁₀)/Dᵥ₅₀ of 1.35; and the polycrystalline material had a Dᵥ₅₀ of 7.5 µm and (Dᵥ₉₀ - Dᵥ₁₀)/Dᵥ₅₀ of 1.15.

### Comparative Example 1

This preparation example was basically the same as Preparation Example 1, only except that in the preparation step of the positive electrode plate, the content of the one-dimensional conductive agent was 0.10 wt.%, and the positive electrode slurry had the solid content of 73% and the viscosity at room temperature of 5,000 mPa·s.

### Comparative Example 2

This preparation example was basically the same as Preparation Example 1, only except that in the preparation step of the positive electrode plate, the cold pressing compaction density of the positive electrode plate was 3.4 g/cm³.

### Comparative Example 3

This preparation example was basically the same as Preparation Example 1, only except that in the preparation step of the positive electrode plate, the cold pressing compaction density of the positive electrode plate was 3.75 g/cm³.

### Performance test

### 1. Volume energy density test

In the present application, volumetric energy density had a meaning well known in the art, and the test method was as follows: the battery cell was allowed to stand at 25°C for 2 h to ensure that the temperature of the battery cell was 25°C. After the battery cell was charged at 1/3 C to a charging cut-off voltage of 4.25 V at 25°C, constant voltage charging was continued at the charging cut-off voltage until the current reached 0.05 C, and the charging was cut off (where C represented the rated capacity of the battery cell). After the battery cell was allowed to stand at 25°C for 1 h, the battery cell was discharged at 1/3 C at 25°C to a discharging cut-off voltage of 2.8 V, and the total discharge energy of the battery cell was recorded as E₀.

The length, width, and height of the battery cell were measured, and the volume of the battery cell was calculated as V₀ = length * width * height.

The volumetric energy density of the battery cell = discharge energy E₀ of the battery cell/volume V₀ of the battery cell.

### 2. DCR Testing Method

In the present application, DC internal resistance (DCR) had a well-known meaning in the art. The test method was as follows: at 25°C, the battery cells prepared in respective examples and comparative examples were taken and charged at a constant current of 1/3 C to a charging cut-off voltage of 4.25 V, then continually charged at a constant voltage of the charging cut-off voltage until the current was 0.05 C, then discharged at 1/3 C to 50% SOC, allowed to stand for 5 min, and then pulsed discharged at 3 C for 30 s.

After being allowed to stand for 5 min, the battery cells were fully charged at 1/3 C, then discharged at 1/3 C to 50% SOC, then allowed to stand at -25°C for 2 h, and then pulsed discharged at 0.36 C for 30 s.

The voltages before and after each pulse discharge were recorded, and the DCRs under different conditions were calculated. The calculation formula was DCR = (voltage before pulse discharge and after standing - voltage after pulse discharge and before standing) / pulse current.

Referring to the foregoing cycling performance test method of the present application, after 1,000 charge-discharge processes, the foregoing DCR test method was repeated at 25°C, and the DCRs under different conditions were calculated. The increase margin in DCR compared with the initial DCR was taken as the DCR increase rate.

### 3. Method for testing cycling performance

In the present application, a method for testing cycling performance was as follows: at 25°C, the battery cells of respective examples and comparative examples were taken and charged at a constant current of 1 C to 50% SOC, then charged at 0.87 C to 80% SOC, then charged at 0.33 C to a charging cut-off voltage of 4.25 V, continually charged at a constant voltage of the charging cut-off voltage until the current was 0.05 C, and then discharged at a constant current of 1 C until the discharging cut-off voltage was 2.8 V, which was a charge-discharge process. At this time, the discharge capacity of the battery was recorded as the discharge capacity of the first cycle of the battery. The charge and discharge were repeated in such a manner, until the capacity decayed to 80% of the discharge capacity of the first cycle, and the number of repetitions at this time was recorded, which was the number of cycles corresponding to the 80% capacity retention rate at 25°C.

Battery cells of respective examples and comparative examples were respectively prepared according to the aforementioned method. For specific parameters and performance, please refer to the tables 1 and 2 below.

**Table 1**

| | Slurry viscosity /mPa·s | Solid Content /% | compaction density at fully discharged state g/cm³ | Content of one-dimensional conductive agent/wt.% | Porosity /% | Proportion of connection /% | Volume energy density Wh/L | Direct-current internal resistance/m Ω | | Direct-current internal resistance increase rate /% |
|---|---|---|---|---|---|---|---|---|---|---|
| | | | | | | | | 25°C | -25°C | |
| Example 1 | 15,000 | 79 | 3.42 | 0.30% | 17.50% | 90% | 680 | 1.3 | 12.5 | 20% |
| Example 2 | 15,000 | 79 | 3.34 | 0.30% | 25.00% | 90% | 670 | 1.8 | 19.3 | 30% |
| Example 3 | 15,000 | 79 | 3.41 | 0.30% | 19.00% | 90% | 675 | 1.28 | 12 | 20% |
| Example 4 | 15,000 | 79 | 3.41 | 0.30% | 19.00% | 90% | 675 | 2.35 | 22.2 | 43% |
| Example 5 | 15,000 | 79 | 3.46 | 0.30% | 16.00% | 90% | 690 | 1.72 | 15.3 | 23% |
| Example 6 | 8000 | 75 | 3.46 | 0.30% | 16.00% | 55% | 690 | 1.95 | 17.2 | 37% |
| Example 7 | 15,000 | 79 | 3.50 | 0.30% | 10.00% | 90% | 695 | 2.2 | 20.3 | 37% |
| Example 8 | 8000 | 75 | 3.42 | 0.30% | 17.50% | 55% | 680 | 1.74 | 16.2 | 35% |
| Example 9 | 20000 | 80 | 3.41 | 0.10% | 17.50% | 25% | 680 | 1.9 | 19.6 | 31% |
| Example 10 | 12,000 | 73 | 3.41 | 0.20% | 17.50% | 25% | 680 | 2.1 | 19.8 | 34% |
| Example 11 | 15,000 | 79 | 3.42 | 0.50% | 17.50% | 90% | 678 | 1.73 | 16.2 | 26% |
| Example 12 | 15,000 | 79 | 3.42 | 0.50% | 17.50% | 90% | 670 | 2.04 | 19.7 | 40% |
| Example 13 | 15,000 | 79 | 3.42 | 1.00% | 17.50% | 90% | 675 | 1.75 | 16.1 | 24% |
| Example 14 | 15,000 | 79 | 3.42 | 0.30% | 17.50% | 90% | 680 | 1.2 | 11.1 | 18% |
| Example 15 | 15,000 | 79 | 3.42 | 0.30% | 17.50% | 90% | 680 | 1.5 | 13.7 | 22% |
| Example 16 | 15,000 | 79 | 3.42 | 0.30% | 17.50% | 90% | 710 | 1.25 | 11.8 | 23% |
| Example 17 | 15,000 | 79 | 3.43 | 0.30% | 17.50% | 90% | 680 | 1.6 | 15 | 27% |
| Comparative Example 1 | 5,000 | 73 | 3.42 | 0.30% | 17.50% | 10% | 683 | 2.5 | 27 | 45% |
| Comparative Example 2 | 15,000 | 79 | 3.26 | 0.30% | 30% | 90% | 650 | 1.31 | 12.7 | 25% |
| Comparative Example 3 | 15,000 | 79 | / | 0.30% | 8% | 90% | Overvoltage of the electrode plate made it impossible to prepare battery cells. | | | |

The battery cells in examples 1-16 each included a positive electrode plate, where the positive electrode plate included a positive electrode current collector and a positive electrode film layer disposed on at least one side of the positive electrode current collector, and the porosity of the positive electrode film layer was 10%-25%; the positive electrode film layer included positive electrode active material particles and a one-dimensional conductive agent, and in the section of the positive electrode film layer along the thickness direction of the positive electrode plate, the proportion of positive electrode active material particles connected by the one-dimensional conductive agent among the positive electrode active material particles was 20%-100%. By comparing with the comparative examples, it could be seen that while the battery cell had high energy density, it could improve the electronic conduction performance of the battery, reduce the DC internal resistance, achieve improvement in the power performance of the battery, and had a low DC internal resistance increase rate, thereby reducing the probability of ohmic polarization in the battery and maintaining the power performance during the cycling process.

As could be seen from the comparison of Examples 1, 8, 9, and 10, in the section of the positive electrode film layer along the thickness direction of the electrode plate, when the proportion of positive electrode active material particles connected by the one-dimensional conductive agent in the cross-section of the positive electrode film along the thickness direction of the electrode plate was 50%-100%, the DC internal resistance of the battery could be further reduced and the power performance can be improved.

As could be seen from the comparison of Examples 1, 2, 3, 5, and 7, when the porosity of the positive electrode film layer was 16%-19%, the single battery achieved a balance between energy density and power performance, and further improved the degradation of power performance during the cycling process of the battery.

As could be seen from the comparison of Examples 1, 9, 10, 11, and 13, based on the total mass of the positive electrode film layer, the mass content of the one-dimensional conductive agent was 0.1%-1%, which could achieve a high connection proportion among the positive electrode active materials, thereby achieving better power performance and energy density.

**Table 2**

| | One-dimensional conductive agent | | | Positive electrode active material | Particle size distribution of positive electrode film layer | | The number of cycles at 25°C and the capacity of 80% |
|---|---|---|---|---|---|---|---|
| | Type | Tube diameter /nm | Layer number of tube walls of CNT | | First peak position /µm | Second peak position /µm | |
| Example 1 | Few-walled CNT | 13 | 7 | LiNi_{0.92}Co_{0.06}Mn_{0.02}O₂ | 3.5 | 9.5 | 2,500 |
| Example 4 | CNF | 150 | / | LiNi_{0.92}Co_{0.06}Mn_{0.02}O₂ | 3.5 | 9.5 | 1,900 |
| Example 11 | Few-walled CNT | 13 | 7 | LiNi_{0.92}Co_{0.06}Mn_{0.02}O₂ | 3.5 | 9.5 | 2,200 |
| Example 12 | Few-walled CNT | 13 | 7 | LiNi_{0.92}Co_{0.06}Mn_{0.02}O₂ | 3.5 | / | 1,900 |
| Example 14 | Single-walled CNT | 2 | 1 | LiNi_{0.92}Co_{0.06}Mn_{0.02}O₂ | 3.5 | 9.5 | 2,700 |
| Example 15 | Multi-walled CNT | 45 | 14 | LiNi_{0.92}Co_{0.06}Mn_{0.02}O₂ | 3.5 | 9.5 | 2,300 |
| Example 16 | Few-walled CNT | 13 | 7 | LiNi_{0.95}Co_{0.01}Mn_{0.03}O₂ | 3.5 | 9.5 | 1,500 |
| Example 17 | Few-walled CNT | 13 | 7 | LiNi_{0.92}Co_{0.06}Mn_{0.02}O₂ | 2.9 | 7.5 | 2000 |

As could be seen from the comparison of Examples 1, 4, 14, and 15, all types of one-dimensional conductive agents could achieve electrical connection among positive electrode active material particles, reduce DC internal resistance, improve power performance, effectively enhance cycling performance, and achieve an excellent number of cycles at the capacity of 80% and 25°C.

As could be seen from the comparison of Examples 11 and 12, both the monocrystalline structure and the monocrystalline-polycrystalline hybrid structure had the power performance and cycling performance of the battery. Compared to the pure monocrystalline material, the combined use of the monocrystalline material and the polycrystalline material gave consideration to the advantages mentioned above. Furthermore, due to the difference in particle size, a certain gradation was formed, making it easier to achieve high energy density.

As could be seen from the comparison of Examples 1 and 16, controlling the molar ratio of the nickel element in the range of 40%-95% was beneficial to give consideration to the energy density and cycling performance of the battery.

As could be seen from the comparison of Examples 1 and 17, in the particle size distribution pattern of the positive electrode film layer, the first peak position was located at 1.5 µm-5 µm, and the second peak position was located at 5 µm-10 µm, which was beneficial to give consideration to the energy density and cycling performance of the battery.

It should be noted that the present application is not limited to the aforementioned embodiments. The above embodiments are examples only, and any embodiment that has substantially the same constitutions and has the same effects as the technical ideas within the scope of the technical solutions of the present application is encompassed within the technical scope of the present application. Furthermore, without departing from the scope of the subject matter of the present application, various modifications that can come into the mind of those skilled in the art applied to the embodiments and other embodiments constructed by combining partial composition elements of the embodiments are also included in the scope of the present application.

## Claims

1. A battery cell, comprising: a positive electrode plate,
wherein the positive electrode plate comprises a positive electrode current collector and a positive electrode film layer disposed on at least one side of the positive electrode current collector, and the porosity of the positive electrode film layer is 10%-25%;
the positive electrode film layer comprises positive electrode active material particles and a conductive agent;
the conductive agent comprises a one-dimensional conductive agent, and in the section of the positive electrode film layer along the thickness direction of the positive electrode plate, the proportion of positive electrode active material particles connected by the one-dimensional conductive agent among the positive electrode active material particles is 20%-100%.

2. The battery cell according to claim 1, wherein in the section of the positive electrode film layer along the thickness direction of the positive electrode plate, the proportion of positive electrode active material particles connected by the one-dimensional conductive agent among the positive electrode active material particles is 50%-100%.

3. The battery cell according to claim 1 or 2, wherein a porosity of the positive electrode film layer is 16%-19%.

4. The battery cell according to any one of claims 1 to 3, wherein based on the total mass of the positive electrode film layer, a mass content of the one-dimensional conductive agent is 0.1%-1%, and optionally 0.2%-0.5%.

5. The battery cell according to any one of claims 1 to 4, wherein based on the total mass of the positive electrode film layer, a mass content of the conductive agent is 0.5%-1.5%, and optionally 0.8%-1.2%.

6. The battery cell according to any one of claims 1 to 5, wherein the positive electrode active material particle comprises a lithium-containing transition metal oxide, and the molar ratio of a nickel element in the lithium-containing transition metal oxide is 40%-95% based on the total mole of a transition metal in the lithium-containing transition metal oxide.

7. The battery cell according to any one of claims 1 to 6, wherein the positive electrode active material comprises the following component: LiₐNiₓCo_{y}M1_{z}M2_{b}O_{c}, wherein 0.6 ≤ a ≤ 1.2, 0.4≤ x ≤ 0.95, 0 < y ≤ 0.3, 0 < z < 0.5, 0≤ b < 0.5, and 1.9 ≤ c ≤ 2.1, wherein M1 comprises one or more of Mn and Al, and M2 comprises one or more of Al, Na, K, Ca, Ba, Sb, Ti, Zr, W, Sr, Nb, Mo, Si, Mg, B, Cr, Ta and Y.

8. The battery cell according to any one of claims 1 to 7, wherein a particle size distribution pattern of the particles in the positive electrode film layer is bimodal distribution as determined by a laser diffraction method.

9. The battery cell according to claim 8, wherein in the particle size distribution diagram of the particles in the positive electrode film layer, a first peak position is located at 1.5 µm-5 µm, and optionally 2.5 µm-3 µm; and/or a second peak position is located at 5 µm-13 µm, optionally 7 µm-11 µm.

10. The battery cell according to any one of claims 1 to 7, wherein a particle size distribution pattern of the particles in the positive electrode film layer is unimodal distribution as determined by a laser diffraction method, and the peak position is located at 2 µm-5 µm.

11. The battery cell according to any one of claims 1 to 10, wherein the positive electrode active material particle comprises a monocrystalline particle.

12. The battery cell according to claim 11, wherein the Dᵥ₅₀ of the monocrystalline particle is 2 µm-5 µm, and the (Dᵥ₉₀ - Dᵥ₁₀)/Dᵥ₅₀ of the monocrystalline particle is 1.2-1.7.

13. The battery cell according to claim 11 or 12, wherein the positive electrode active material particle further comprises a polycrystalline particle.

14. The battery cell according to claim 13, wherein the Dᵥ₅₀ of the polycrystalline particle is 5 µm-15 µm, and the (Dᵥ₉₀ - Dᵥ₁₀)/Dᵥ₅₀ of the polycrystalline particle is 1.1-1.4.

15. The battery cell according to claim 13 or 14, wherein a mass ratio of the monocrystalline particle to the polycrystalline particle is 1:9 - 5:5.

16. The battery cell according to any one of claims 1 to 15, wherein at least part of a surface of the positive electrode active material is provided with a cladding layer, and the cladding layer comprises a metal oxide or a metal fluoride that is optionally one or more of aluminum oxide, titanium oxide, tungsten oxide, niobium oxide, boron oxide, molybdenum oxide, lithium fluoride and aluminum fluoride.

17. The battery cell according to any one of claims 1 to 16, wherein the one-dimensional conductive agent comprises one or more of a carbon nanotube, a carbon nanofiber, a graphene nanoribbon, a metal nanowire and a metal oxide nanowire.

18. The battery cell according to any one of claims 1 to 17, wherein the one-dimensional conductive agent is a carbon nanotube conductive agent.

19. The battery cell according to claim 18, wherein the carbon nanotube conductive agent comprises one or more of a single-walled carbon nanotube, a few-walled carbon nanotube and a multi-walled carbon nanotube.

20. The battery cell according to claim 19, wherein the single-walled carbon nanotube has the number of tube wall layers of 1, and a tube diameter of 2 nm-5 nm.

21. The battery cell according to claim 19 or 20, wherein the few-walled carbon nanotube has the number of tube wall layers of 2-9, and a tube diameter of 5 nm-15 nm.

22. The battery cell according to any one of claims 19 to 21, wherein the multi-walled carbon nanotube has the number of tube wall layers of 10-20, and a tube diameter of 15 nm-50 nm.

23. The battery cell according to any one of claims 1 to 22, wherein the conductive agent further comprises a zero-dimensional conductive agent, and the zero-dimensional conductive agent comprises one or more of Super-P, acetylene black, and Ketjen black.

24. The battery cell according to any one of claims 1 to 23, wherein the compaction density of the positive electrode film layer in a fully discharged state is 3.1 g/cm³ - 3.7 g/cm³.

25. The battery cell according to any one of claims 1 to 24, wherein the battery cell further comprises a negative electrode plate, and the negative electrode plate comprises a negative electrode current collector and a negative electrode film layer disposed on at least one side of the negative electrode current collector,
the negative electrode film layer comprises a negative electrode active material, and the negative electrode active material comprises a silicon-based material and/or a carbon-based material;
the silicon-based material comprises one or more of elementary silicon, a silicon oxide material, and a silicon-carbon material; and
the carbon-based material comprises one or more of artificial graphite and natural graphite.

26. The battery cell according to any one of claims 1 to 25, wherein a cell-to-case insertion clearance of the battery cell is 89%-94%.

27. The battery cell according to any one of claims 1 to 26, wherein the battery cell comprises any one of a cylindrical battery cell, a square shell battery cell and a pouch cell, and optionally a cylindrical battery cell.

28. A battery apparatus, comprising the battery cell according to any one of claims 1 to 27, and comprising at least one of a battery module, a battery pack and an energy storage apparatus.

29. An electrical apparatus, comprising the battery cell according to any one of claims 1 to 27 or the battery apparatus according to claim 28.
